# EUROPEAN PATENT SPECIFICATION

(11) **EP 0 577 132 B1**
(45) Date of publication and mention of the grant of the patent: **18.12.1996**
(21) Application number: 93110543.1
(22) Date of filing: 01.07.1993
(51) Int. Cl.: B60K 25/06, F02B 63/06

(54) **Arrangement of a driven attachment implement at the front of a utility vehicle**
Anordnung eines angetriebenen Anbaugeräts an der Frontseite eines Nutzfahrzeuges
Disposition d'un accessoire entrainé à l'avant d'un véhicule utilitaire

(30) Priority: 02.07.1992 DE 4221662
(43) Date of publication of application: 05.01.1994
(73) Proprietor: IVECO MAGIRUS AG, D-89079 Ulm (DE)
(72) Inventor: Kögel, Walter, D-7904 Erbach (DE); Ruckerbauer, Johannes, D-8901 Zusmarshausen (DE)
(74) Representative: Boggio, Luigi

(56) References cited:
- DE-A- 3 124 040
- DE-C- 955 837
- GB-A- 2 168 015
- EP-A2-182437

## Description

The invention relates to an arrangement of a driven attachment implement at the front of a utility vehicle, in particular with a tiltable driver's compartment, as specified in the preample of claim 1, for example as disclosed in EP-A-182 437.

Holding brackets which are rigidly connected to the chassis are provided for known attachment implements at the front of the vehicles, for example front-mounted pumps on fire engines, which can be driven by the vehicle's drive unit if necessary. On account of the rigid mounting arrangement, the front grille of the vehicle can only be partly opened, if at all, or must be cut out or removed for maintenance purposes. Moreover, if the utility vehicles has a tiltable driver's compartment, this compartment can only tilt through a small angle on account of the front-mounted implement. This makes it more difficult to reach the area to carry out maintenance work.

It is known from the document EP-A2-182 437 a tractor provided with a second engine to drive an agricultural implement located in the front side of the tractor. The implement is mounted on the chassis by pivotable parallel rods, arranged as an articulated parallelogram. The implement is located in a lower position for use on the land, and is raised by a hydraulic cylinder parallel with it self to reach and maintain an upper rest position.

The object of the invention is to provide an arrangement of the attachment implement of the above-mentioned type which facilitates maintenance work in the front area of the utility vehicle with the aid of simple means, while still enabling the attachment implement to be reliably operated.

The object on which the invention is based is solved by the features presented in the characteristic part of claim 1.

The subject matter of the invention is developed in an advantageous manner by the features of subclaims 2-13.

The essence of the invention are the construction of the attachment implement pivoting with a pivot mounting about an essentially horizontal axis located in the vicinity of the front of the utility vehicle and extending in the transverse direction of the latter, and the provision by which the attachment implement is advantageously maintained locked in the essentially horizontal position for use by a locking device, and the pivot mounting of the attachment implement preferably strikes against a stop on the vehicle in the oblique position in which the implement is not used.

The locking device on the vehicle comprises a spring-loaded pin, which can engage in a hole in the pivot mounting of the attachment implement.

The pin is preferably bevelled to form a cone at its end which is locked in the hole in the pivot mounting so that it can enter the hole in the pivot mounting more easily for locking purposes.

At its non-locking end the pin has an inclined face which co-operates with a corresponding inclined face of an actuating handle extending perpendicularly to the pin such that the spring-loaded pin is displaced axially when the actuating handle is pivoted through approximately 90°, for example.

The attachment implement may advantageously comprise a mechanical or pneumatic compensating spring which automatically holds the attachment implement in each pivot position. This enables the attachment implement to be pivoted upwards and downwards with little exertion by, for example, the manual power of an operator, in particular by taking hold of a handle of the pivot mounting at the front of the vehicle.

However a particular feature of the attachment implement is a pivot drive with a separate power connection. The pivot drive may, for example, be an electric motor with a linkage or a hydraulic pump with a cylinder which can in particular be supplied by the hydraulic system of a tiltable driver's compartment.

The pivot drive may also be a compressed-air cylinder which is in particular connected to the pneumatic system of the utility vehicle.

A particularly simple arrangement is obtained if the pivot axis of the pivot mounting coincides with the axis of the (essentially horizontal) articulated shaft.

If - for reasons concerning assembly - the pivot axis of the pivot mounting must lie outside of the articulated shaft axis in the vicinity of the latter, the articulated shaft is advantageously provided with a spline end in order to produce an articulated shaft of a variable length which allows for the pivotal movement of the attachment implement.

Using simple means, the invention makes the front cover (front grille) of a utility vehicle easily accessible for maintenance work. If the utility vehicle has a tiltable driver's compartment, the latter's angle of tilt can be enlarged so as to make the drive unit of the utility vehicle even more accessible. A front grille of a utility vehicle can be used without being altered and, if necessary, easily opened. The front grille does not require largish openings. The invention enables the front grille and a tiltable driver's compartment to be used as in a utility vehicle which does not have a front-mounted implement.

The invention is explained in detail in the following on the basis of embodiments and with reference to the accompanying drawings, in which:
Figure 1 is a diagrammatic side view of an arrangement of an attachment implement at the front of a utility vehicle with the implement in the position for use,
Figure 2 shows the arrangement of Figure 1 with the implement in the oblique position in which it is not used,
Figure 3 shows a locking device for locking the implement according to Figures 1 and 2 in the horizontal position for use,
Figure 4 is a section along the line C-C in Figure 3,
Figure 5 is a diagrammatic view showing the attachment implement of Figure 1 coupled to a vehicle engine, the pivot axis of the attachment implement coinciding with the axis of the output shaft of the vehicle engine, and
Figure 6 is a diagrammatic view, similar to Figure 5, of a front-mounted implement with a pivot axis slightly below the axis of the output shaft.

According to the drawings an arrangement (1) of an attachment implement, e.g. a front-mounted pump of a fire engine, comprises a pivot mounting (7), which supports the attachment implement (2) like a bracket in the vicinity of the front (3) of the utility vehicle, which may also comprise a tiltable driver's compartment (4).

In the area of the front (3) of the utility vehicle the pivot mounting (7) comprises an essentially horizontal pivot axis (8), which extends in the transverse direction of the vehicle, and the attachment implement (2) can be pivoted downwards together with the pivot mounting (7) from an essentially horizontal position (A) in which the attachment implement (2) is used into an oblique position (B) in which it is not used.

The attachment implement (2) can be maintained locked in the essentially horizontal position for use (A) by a locking device (9). It strikes against a stop on the vehicle in the lowered oblique position (B) in which the implement is not used.

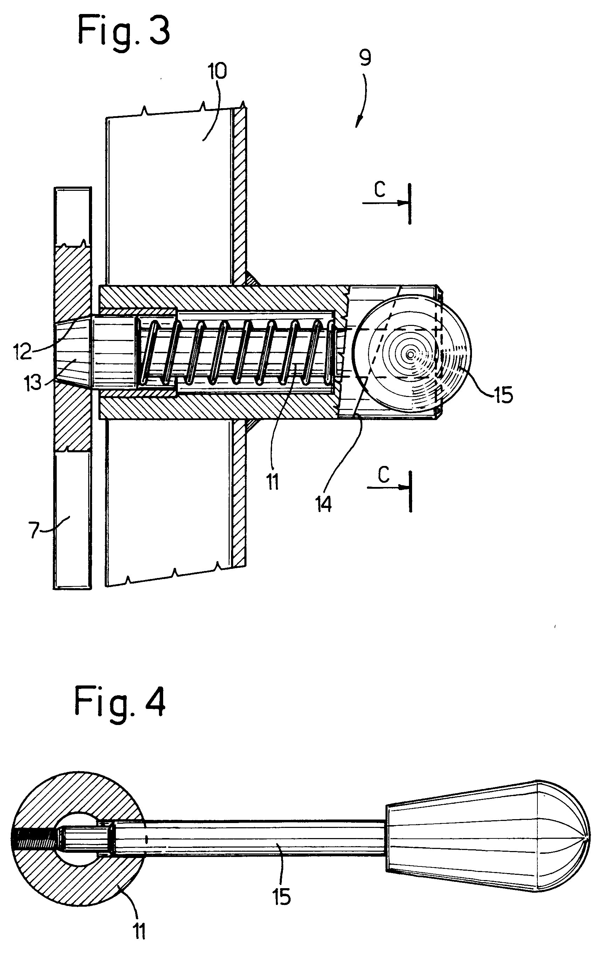

The locking device (9), which is shown in particular in Figures 3 and 4, is secured to the chassis (10) and comprises a spring-loaded pin (11), which can engage in a corresponding hole (12) in the pivot mounting (7) of the attachment implement. The pin is in particular bevelled to form a cone at its locking end 13 so that it can enter the hole in the pivot mounting (7) more easily through the force of the preloading spring.

Another hole may be provided in the pivot mounting, which is in particular formed as a shackle surrounding the attachment implement, so that the pin can also be automatically locked when the implement is in the lower extreme position.

At its non-locking end the pin (11) has an inclined face (14) which can co-operate with a corresponding inclined face of an actuating handle (15) shown in detail in Figure 4. The actuating handle can be pivoted through 90°, for example, so that, through the relative rotation of the two inclined faces, the pin (11) can be displaced axially to the right according to Figure 3 against the force of the preloading spring in order to be unlocked.

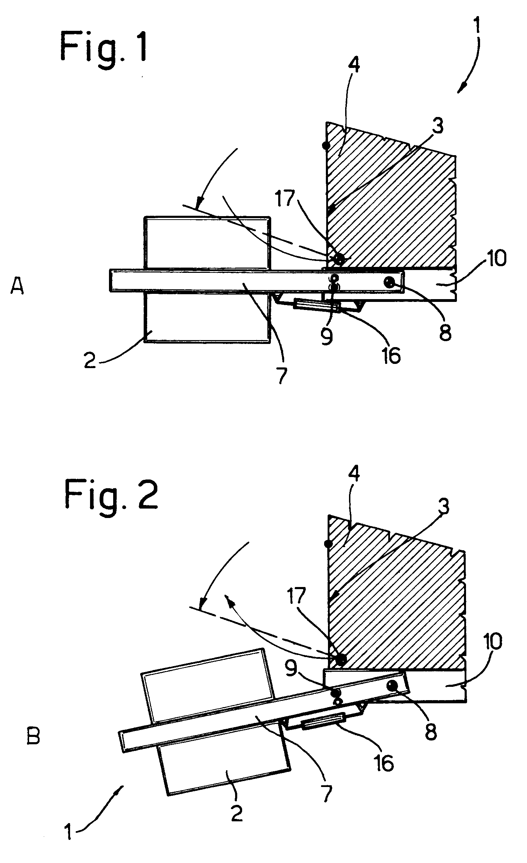

As is obvious, if a compensating spring, e.g. a gas pressure spring, is provided, the attachment implement (2) can therefore be pivoted upwards and downwards by the power of a single operator in order, e.g. in the case of an implement pivoted downwards according to Figure 2, to pivot the driver's compartment (4) forwards about its tilting axis (17) anticlockwise, as represented by an arrow in Figure 2.

The pivotal movement may also be effected by an electrical pivot drive, for example in the form of an electric motor with a pivot linkage (16), as illustrated in Figures 1 and 2.

The pivot drive may also be a hydraulic or pneumatic drive, e.g. a hydraulic pump with a cylinder or a compressed-air cylinder. The electrical, hydraulic or pneumatic pivot power is preferably supplied by appropriate units of the actual utility vehicle (battery, hydraulic or pneumatic system of the vehicle).

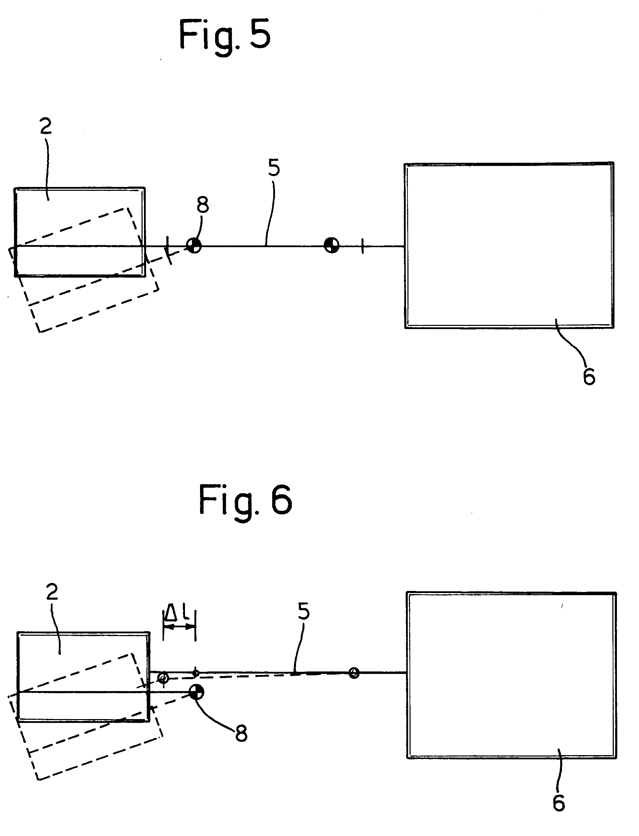

According to Figure 5 the attachment implement, e.g. a front-mounted pump of a fire engine, is driven by the power of the vehicle engine (6) via an intermediate articulated shaft (5). The output shaft of the engine and the articulated shaft (5) are in this case axially aligned, and the pivot axis (8) of the pivot mounting (7) coincides with the articulation centre of the articulated shaft (5), so that the attachment implement (2) can be pivoted using simple means.

If - for example for reasons concerning assembly - the pivot axis (8) must lie outside of the articulation centre of the articulated shaft (5), e.g. slightly below this, according to Figure 6, an additional spline end in the articulated shaft (5) is provided for the required length compensation ΔL when the implement is lowered.

The arrangement according to the invention is not only applicable to the front of a utility vehicle. It relates to all parts or accessories which are attached to the vehicle and which must be swung out of the way or down in order to open a door, cover, grille or similar so as, for example, to enlarge the opening angle of the door, cover, grille, etc.

## Claims

1. Arrangement (1) of a driven attachment implement (2) at the front (3) of a utility vehicle, in particular with a tiltable driver's compartment (4), wherein the attachment implement (2) is connected via an articulated shaft (5) to the vehicle engine (6) and comprises a pivot mounting (7) pivotable about an essentially horizontal pivot axis (8) located in the vicinity of the front of the vehicle and extending in the transverse direction of the latter, characterised in that said attachment implement (2) can be pivoted together with said pivot mounting (7) from an essentially horizontal position (A) for use to an oblique downward position (B) in which it is not used, said pivot mounting (7) when in said downward position (B) striking against a stop on the vehicle, a locking device (9) being provided for maintaining said attachment implement in said horizontal position (A).

2. Arrangement according to claim 1, characterised in that the locking device (9) is secured to the chassis (10) of the vehicle and comprises a spring-loaded pin (11), which can engage in a hole (12) provided on said pivot mounting (7).

3. Attachment according to claim 2, characterised in that the pin (11) has a cone (13) at its locking end which is adapted to enter said hole (12) to lock said pivot mounting (7).

4. Attachment according to claim 2 or 3, characterised in that said pin (11) is provided with a non-locking end having an inclined face (14) engaging a corresponding inclined face of an actuated handle (15) extending perpendicularly to the pin (11) in order to displace the pin (11) axially when the actuating handle (15) is pivoted.

5. Arrangement according to one of claims 1 to 4, characterised in that the attachment implement (2) comprises a mechanical or pneumatic compensating spring which automatically holds the attachment implement in each pivot position.

6. Arrangement according to one of claims 1 to 5, characterised in that the attachment implement (2) comprises a pivot drive.

7. Arrangement according to claim 6, characterised in that the pivot drive is an electric motor with a linkage (16).

8. Arrangement according to claim 6, characterised in that the pivot drive is a hydraulic pump with a cylinder which is in particular supplied by the hydraulic system of the tiltable driver's compartment (4).

9. Arrangement according to claim 6, characterised in that the pivot drive is a compressed-air cylinder which is in particular connected to the pneumatic system of the utility vehicle.

10. Arrangement according to one of claims 1 to 9, characterised in that the pivot axis (8) of the pivot mounting (7) coincides with the articulation centre of the essentially horizontal articulated shaft (5).

11. Arrangement according to one of claims 1 to 9, characterised in that the pivot axis (8) of the pivot mounting (7) lies in the vicinity of the articulation centre of the articulated shaft (5) and the length of the latter can be varied by means of a spline end.

12. Arrangement according to one of claims 1 to 11, characterised in that the pivot mounting (7) has a handle at the front of the vehicle.

## Patentansprüche

1. Anordnung (1) eines angetriebenen Anbaugeräts (2) an der Frontseite (3) eines Nutzfahrzeugs, insbesondere mit kippbarer Fahrerkabine (4), bei der das Anbaugerät (2) über eine Gelenkwelle (5) mit dem Fahrzeugmotor (6) verbunden ist und eine Schwenklagerung (7) aufweist, die um eine im wesentlichen waagerechte Schwenkachse (8) schwenkbar ist, die sich in der Nähe der Frontseite des Fahrzeugs befindet und in Querrichtung des Fahrzeugs erstreckt, dadurch **gekennzeichnet**, daß das Anbaugerät (2) zusammen mit der Schwenklagerung (7) aus einer im wesentlichen waagerechten Gebrauchsposition (A) in eine schräg abwärts gerichtete Ruheposition (B) schwenkbar ist, welche Schwenklagerung (7) in der abwärts gerichteten Position (B) gegen einen Anschlag des Fahrzeugs anschlägt, wobei eine Verriegelungseinrichtung (9) zum Halten des Anbaugeräts in der waagerechten Position (A) vorgesehen ist.

2. Anordnung nach Anspruch 1, dadurch **gekennzeichnet**, daß die Verriegelungseinrichtung (9) am Fahrgestell (10) des Fahrzeugs befestigt ist und einen federbelasteten Stift (11) aufweist, der in eine Bohrung (12) an der Schwenklagerung (7) eingreifen kann.

3. Anordnung nach Anspruch 2, dadurch **gekennzeichnet**, daß der Stift (11) einen Konus (13) an seinem Verriegelungsende aufweist, der in die Bohrung (12) zum Verriegeln der Schwenklagerung (7) eintreten kann.

4. Anordnung nach Anspruch 2 oder 3, dadurch **gekennzeichnet**, daß der Stift (11) ein Nichtverriegelungsende mit einer geneigten Fläche (14) aufweist, die mit einer entsprechenden geneigten Fläche eines betätigten Handgriffes (15) zusammenwirkt, der sich senkrecht zu dem Stift (11) erstreckt, so daß der Stift (11) axial verschoben wird, wenn der Betätigungshandgriff (15) geschwenkt wird.

5. Anordnung nach einem der Ansprüche 1 bis 4, dadurch **gekennzeichnet**, daß das Anbaugerät (2) eine mechanische oder pneumatische Ausgleichsfeder aufweist, die das Anbaugerät automatisch in jeder Schwenkposition hält.

6. Anordnung nach einem der Ansprüche 1 bis 5, dadurch **gekennzeichnet**, daß das Anbaugerät (2) einen Schwenkantrieb aufweist.

7. Anordnung nach Anspruch 6, dadurch **gekennzeichnet**, daß der Schwenkantrieb ein Elektromotor mit einem Gestänge (16) ist.

8. Anordnung nach Anspruch 6, dadurch **gekennzeichnet**, daß der Schwenkantrieb eine Hydraulikpumpe mit einem Zylinder ist, der insbesondere durch das Hydrauliksystem der schwenkbaren Fahrerkabine (4) versorgt wird.

9. Anordnung nach Anspruch 6, dadurch **gekennzeichnet**, daß der Schwenkantrieb ein Druckluftzylinder ist, der insbesondere verbunden ist mit dem Pneumatiksystem des Nutzfahrzeugs.

10. Anordnung nach einem der Ansprüche 1 bis 9, dadurch **gekennzeichnet**, daß die Schwenkachse (8) der Schwenklagerung (7) mit dem Gelenkmittelpunkt der im wesentlichen waagerechten Gelenkwelle (5) zusammentrifft.

11. Anordnung nach einem der Ansprüche 1 bis 9, dadurch **gekennzeichnet**, daß die Schwenkachse (8) der Schwenklagerung (7) in der Nähe des Gelenkmittelpunkts der Gelenkwelle (5) liegt, und daß deren Länge mit Hilfe eines Keilendes variiert werden kann.

12. Anordnung nach einem der Ansprüche 1 bis 11, dadurch **gekennzeichnet**, daß die Schwenklagerung (7) einen Handgriff an der Frontseite des Fahrzeugs aufweist.

## Revendications

1. Disposition (1) d'un outil accessoire entraîné (2) à l'avant (3) d'un véhicule utilitaire, comportant en particulier une cabine de conducteur basculante (4), dans laquelle l'outil accessoire (2) est relié par un arbre articulé (5) au moteur (6) du véhicule et comprend une monture de pivot (7) pouvant pivoter autour d'un axe de pivot essentiellement horizontal (8) placé au voisinage de l'avant du véhicule et s'étendant dans la direction transversale de ce dernier,
caractérisée en ce qu'
on peut faire pivoter l'outil accessoire (2) solidairement de la monture de pivot (7) pour passer d'une position essentiellement horizontale d'utilisation (A) à une position oblique inclinée vers le bas (B) dans laquelle l'outil n'est pas utilisé, la monture de pivot (7), lorsqu'elle se trouve dans la position inclinée vers le bas (B), venant porter contre une butée du véhicule, et un dispositif de verrouillage (9) étant utilisé pour maintenir l'outil accessoire dans la position horizontale (A).

2. Disposition selon la revendication 1,
caractérisée en ce que
le dispositif de verrouillage (9) est fixé au châssis (10) du véhicule et comprend une tige (11) poussée par un ressort, cette tige pouvant s'engager dans un trou (12) prévu sur la monture de pivot (7).

3. Disposition selon la revendication 2,
caractérisée en ce que
la tige (11) comporte, à son extrémité de verrouillage, un cône (13) qui est destiné à pénétrer dans le trou (12) pour verrouiller la monture de pivot (7).

4. Disposition selon la revendication 2 ou 3,
caractérisée en ce que
la tige (11) est munie d'une extrémité ne formant pas verrouillage, cette extrémité comportant une face inclinée (14) s'engageant contre une face inclinée correspondante d'une poignée de manoeuvre (15) s'étendant perpendiculairement à la tige (11), de manière à déplacer cette tige (11) axialement lorsqu'on fait pivoter la poignée de manoeuvre (15).

5. Disposition selon l'une des revendications 1 à 4,
caractérisée en ce que
l'outil accessoire (2) comprend un ressort de compensation mécanique ou pneumatique qui maintient automatiquement l'outil accessoire dans chaque position de pivot.

6. Disposition selon l'une des revendications 1 à 5,
caractérisée en ce que
l'outil accessoire (2) comprend un entraînement de pivot.

7. Disposition selon la revendication 6,
caractérisée en ce que
l'entraînement de pivot est un moteur électrique muni d'une tige de liaison (16).

8. Disposition selon la revendication 6,
caractérisée en ce que
l'entraînement de pivot est une pompe hydraulique munie d'un cylindre qui est en particulier alimenté par le système hydraulique de la cabine de conducteur basculante (4).

9. Disposition selon la revendication 6,
caractérisée en ce que
l'entraînement de pivot est un cylindre à air comprimé qui est en particulier branché au système pneumatique du véhicule utilitaire.

10. Disposition selon l'une des revendications 1 à 9,
caractérisée en ce que
l'axe de pivot (8) du montage en pivot (7) coïncide avec le centre d'articulation de l'arbre articulé essentiellement horizontal (5).

11. Disposition selon l'une des revendications 1 à 9,
caractérisée en ce que
l'axe de pivot (8) du montage en pivot (7) se situe au voisinage du centre d'articulation de l'arbre articulé (5), et en ce qu'on peut faire varier la longueur de ce dernier au moyen d'une extrémité à clavette.

12. Disposition selon l'une des revendications 1 à 11,
caractérisée en ce que
le montage en pivot (7) comporte une poignée à l'avant du véhicule.
